(19) Europäisches Patentamt / European Patent Office / Office européen des brevets

(11) **EP 4 065 384 B1**

(12) **FASCICULE DE BREVET EUROPEEN**

(45) Date de publication et mention
de la délivrance du brevet:
**14.08.2024   Bulletin 2024/33**

(21) Numéro de dépôt: **20821336.3**

(22) Date de dépôt: **18.11.2020**

(51) Classification Internationale des Brevets (IPC):
**B60C 9/22** *(2006.01)*       **B60C 11/00** *(2006.01)*
**B60C 9/28** *(2006.01)*       **B60C 9/20** *(2006.01)*

(52) Classification Coopérative des Brevets (CPC):
**B60C 11/0083; B60C 9/22; B60C 9/28;**
B60C 2009/2012; B60C 2009/2016;
B60C 2009/2019; B60C 2009/208; B60C 2009/209;
B60C 2009/2228; B60C 2009/2261;
B60C 2009/2276; B60C 2009/283;
B60C 2011/0033; B60C 2200/06

(86) Numéro de dépôt international:
**PCT/FR2020/052114**

(87) Numéro de publication internationale:
**WO 2021/105586 (03.06.2021 Gazette 2021/22)**

(54) **ARMATURE DE SOMMET DE PNEUMATIQUE CONSTITUEE DE DEUX COUCHES DE SOMMET DE TRAVAIL ET D'UNE COUCHE D'ELEMENTS DE RENFORCEMENT CIRCONFERENTIELS**

LUFTREIFEN-BODENVERSTÄRKUNG, BESTEHEND AUS ZWEI ARBEITS-BODENLAGEN UND EINER LAGE AUS UMLAUFENDEN VERSTÄRKUNGSELEMENTEN

PNEUMATIC TIRE CROWN REINFORCEMENT MADE UP OF TWO WORKING CROWN PLIES AND A PLY OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.11.2019   FR 1913379**

(43) Date de publication de la demande:
**05.10.2022   Bulletin 2022/40**

(73) Titulaire: **COMPAGNIE GENERALE DES ETABLISSEMENTS MICHELIN**
**63000 Clermont-Ferrand (FR)**

(72) Inventeurs:
• **FOURNIER, Orel**
  **63040 CLERMONT-FERRAND Cedex 9 (FR)**
• **REHAB, Hichem**
  **63040 CLERMONT-FERRAND Cedex 9 (FR)**
• **SALLAZ, Gilles**
  **63040 CLERMONT-FERRAND Cedex 9 (FR)**
• **DAYET, Patrick**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 3 135 503       EP-A1- 3 423 293**
**WO-A1-2019/048762**

EP 4 065 384 B1

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ». Le rayon d'un point du pneumatique est la distance radiale entre ledit point et l'axe de rotation du pneumatique.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984. Les mesures sont effectuées sur câbles extraits de pneumatiques neufs.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature de sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature de sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune auxdites deux nappes de travail.

Par ailleurs, l'usage de pneumatiques sur des véhicules pour poids-lourds de type « approche chantier » conduit les pneumatiques à subir des chocs et agressions lors de roulages sur des sols caillouteux. Ces chocs et agressions sont bien entendu néfastes quant aux performances en termes d'endurance.

Il est encore connu de l'homme du métier d'augmenter le nombre de nappes constituant l'armature de sommet pour améliorer l'endurance du pneumatique à l'égard de tels chocs.

Quelles que soient l'une de ces solutions telles que présentées précédemment, la présence d'une ou plusieurs couches d'éléments de renforcement supplémentaire conduit à une masse plus importante du pneumatique et à des coûts de fabrication des pneumatiques plus importants.

La demande de brevet WO 2017149223 ou la demande de brevet WO 2019048762 décrivent encore une armature de sommet d'un pneumatique permettant d'alléger celui-ci tout en conservant des propriétés d'endurance satisfaisantes au regard des chocs subis sur la bande de roulement.

Les inventeurs ont toutefois mis en évidence que lors de roulages sur des sols très particuliers constitués de nombreux cailloux de petites dimensions, de tels pneumatiques pouvaient voir leur performance d'endurance diminuée du fait de l'allégement du pneumatique et notamment de son armature de sommet.

Les inventeurs se sont ainsi donnés pour mission de fournir des pneumatiques pour véhicules "Poids-Lourds", par exemple de type « approche chantier », dont les performances d'endurance sont améliorées notamment lors de roulages sur des sols très caillouteux et dont la masse globale reste contenue.

Ce but est atteint selon l'invention par un pneumatique pour véhicule de type poids-lourd, à armature de carcasse radiale, comprenant une armature de sommet comprenant deux couches de sommet de travail d'éléments de renforcement croisés d'une nappe à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels, l'armature de sommet étant coiffée radialement d'une bande de roulement, ladite bande de roulement étant réunie à deux bourrelets par l'intermédiaire de deux flancs, les deux couches de sommet de travail et ladite au moins une couche d'éléments de renforcement circonférentiels étant seules présentes pour constituer l'armature de sommet sur au moins 80 % de la largeur axiale de l'armature de sommet, les éléments de renforcement de la couche de travail radialement la plus extérieure formant un angle $\alpha$2 avec la direction circonférentielle supérieur en valeur absolue à l'angle $\alpha$1 formé par les éléments de renforcement de la couche de travail radialement la plus intérieure avec la direction circonférentielle, la valeur absolue de la différence entre les valeurs absolues des angles $\alpha$2 et $\alpha$1 étant supérieure à 4°, l'angle moyen $\alpha$ satisfaisant la relation :

$$14+131*\exp(-L/100) < \alpha < 28+110*\exp(-L/100)$$

$\alpha$ étant défini par la relation Arctan((tan(|$\alpha$1|)*tan(|$\alpha$2|))$^{1/2}$), L étant la largeur maximale du pneumatique mesurée selon la direction axiale et exprimée en mm, dans une coupe méridienne dudit pneumatique, le ratio (R) de la différence entre la distance de mesurée selon une direction radiale contenue dans le plan médian circonférentiel entre la couche de travail radialement la plus extérieure et la surface extérieure de la bande de roulement et la distance $d_E$ mesurée selon une direction radiale passant par une extrémité de la couche d'éléments de renforcement circonférentiels entre la couche de travail radialement la plus extérieure et la surface extérieure de la bande de roulement sur la distance ds mesurée selon une direction radiale passant par ladite extrémité de la couche d'éléments de renforcement circonférentiels entre la surface extérieure de la bande de roulement et la droite (D) tangente au point de la surface extérieure de la bande de roulement contenu dans le plan médian circonférentiel étant tel que 0.05 < R < 3.

La largeur L est mesurée sur un pneumatique monté sur sa jante nominale et gonflé à sa pression nominale, et est exprimée en millimètres.

Les distances de et $d_E$ peuvent être mesurées selon une technique de tomographie, le pneumatique étant monté sur sa jante nominale et gonflé à sa pression nominale ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé. Les distances de et $d_E$ sont exprimés en millimètres.

La distance ds est mesurée sur un pneumatique monté sur sa jante nominale et gonflé à sa pression nominale durant 24 heures, puis dégonflé à la pression de 2 bar de façon à garantir un bon positionnement sur la jante. La position de mesure en surface de la bande de roulement est réalisée en référence à l'extrémité de la couche d'éléments de renforcement circonférentiels, qui est déterminée à l'aide de l'analyse d'une coupe d'un pneumatique ou par radiographie du pneumatique. La distance ds est exprimée en millimètres.

Les angles $\alpha 1$ et $\alpha 2$, exprimés en degré, sont mesurés sur une coupe du pneumatique. Les mesures d'angles sont, selon l'invention, réalisées au niveau du plan médian circonférentiel.

Avantageusement encore, le pneumatique selon l'invention est destiné à être gonflé à une pression de gonflage P supérieure ou égale à 6.5 bar.

De préférence selon l'invention, ladite au moins une couche d'éléments de renforcement circonférentiels est continue axialement et de préférence encore centrée sur le plan médian circonférentiel.

De préférence selon l'invention, les éléments de renforcement desdites deux couches de sommet de travail sont métalliques.

Les résultats obtenus avec des pneumatiques conformes à l'invention ont effectivement mis en évidence que les performances en termes d'endurance peuvent être améliorées notamment lors de roulage sur sol caillouteux, l'armature de sommet du pneumatique étant allégée en comparaison de pneumatiques plus usuels. L'allègement de l'armature de sommet du pneumatique s'accompagne d'une simplification de fabrication et d'une diminution des coûts de fabrication.

Les résultats ont effectivement mis en évidence que les pneumatiques selon l'invention peuvent être allégés en diminuant le nombre de couches constitutives de l'armature de sommet, notamment par la suppression de la couche de protection, tout en conservant voire améliorant les propriétés d'endurance du sommet du pneumatique notamment lors de roulages sur des sols caillouteux dont les cailloux présentent de petites dimensions.

Les inventeurs pensent interpréter ces résultats par l'épaisseur de mélanges caoutchouteux plus importante entre la partie radialement intérieure des sculptures et la couche d'éléments de renforcement radialement la plus extérieure dans la partie centrale du pneumatique en comparaison de la même épaisseur dans les parties axialement extérieures du pneumatique. Les inventeurs pensent que cette caractéristique du pneumatique va, lors de son utilisation, diminuer la rigidité du pneumatique dans cette zone du fait d'une sollicitation des éléments de renforcement de la couche d'éléments de renforcement circonférentiels moins importante dans la partie centrale par rapport à celle des éléments de renforcement sur les bords de la couche d'éléments de renforcement circonférentiels, lors de la fabrication du pneumatique. Dans des conceptions plus usuelles, les éléments de renforcement circonférentiels sont sollicités de la même façon sur toute la largeur de la couche d'éléments de renforcement circonférentiels. La partie centrale du pneumatique présente une rigidité moins importante, en comparaison de pneumatiques plus usuels, qui semble lui permettre de mieux absorber les déformations dues aux cailloux de petites dimensions. Les inventeurs pensent avoir mis en évidence que lors de roulages sur des sols caillouteux dont les cailloux présentent de petites dimensions, la bande de roulement va être moins agressée et va présenter moins de zones de fissuration, diminuant ainsi les risques de corrosion des éléments de renforcement de la couche de travail radialement la plus extérieure.

Les pneumatiques présentent par ailleurs une performance en termes d'endurance améliorée, en comparaison de pneumatiques plus usuels, à l'égard de chocs apparaissant sur la bande de roulement par exemple lors de roulage sur sol caillouteux lorsque les cailloux présentent des dimensions relativement importantes. Il est en effet connu de l'homme du métier que pour améliorer les performances d'endurance de l'armature de sommet d'un pneumatique à l'égard de ce type de chocs, il est usuel d'augmenter le nombre de couches d'éléments de renforcement.

Les inventeurs interprètent ce résultat du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

Pour améliorer encore les performances du pneumatique, notamment lors de roulage sur de cailloux de petites dimensions, le ratio R est avantageusement supérieur à 0.2 et avantageusement encore supérieur à 0.3.

Afin de ne pas trop pénaliser la masse du pneumatique et ses propriétés en termes de résistance au roulement, le ratio R est avantageusement inférieur à 2 et avantageusement encore inférieur à 1.5.

Avantageusement selon l'invention, le ratio d'utilisation du potentiel de rupture F2/FR2 de la couche de travail radialement la plus extérieure est inférieur à 1/6, dans lequel :
FR2 est la force rupture en extension uniaxiale des câbles de la couche de travail radialement la plus extérieure,

$$F2 = p_2 * Tc * [(\tan(|\alpha 1|)/(\tan(|\alpha 1|)+\tan(|\alpha 2|))) / \cos^2(|\alpha 2|) + C],$$

avec

Tc = 0.078 * P * Rs* (1-($R_S^2$-$R_L^2$)/(2*Rt*Rs)),
P : la pression de gonflage du pneumatique, exprimée en bar,
C = 0.00035*(min((L-80) / sin(|$\alpha$1|), (L-80) / sin(|$\alpha$2|), 480)-480),
pz : le pas de pose des éléments de renforcement de la couche de sommet de travail radialement la plus extérieure,
mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus intérieure,
$R_L$ : moyenne des rayons des points axialement les plus à l'extérieur de la partie principale de la couche d'armature de carcasse de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

L'épaisseur Es et le pas $p_2$ sont mesurés sur une coupe du pneumatique et sont exprimés en millimètres.
Les inventeurs font encore le constat que le choix de la valeur absolue de la différence entre les valeurs absolues des angles précités $\alpha$1 et $\alpha$2 associé à l'angle moyen $\alpha$ et au ratio d'utilisation du potentiel de rupture F2/FR2 tels que définis selon cette réalisation avantageuse de l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel ; les inventeurs font ainsi le constat que la suppression de la couche de protection est rendue possible et permet de contribuer à l'allègement du pneumatique. En outre, la présence de ladite au moins une couche d'éléments de renforcement circonférentiels autorise un angle moyen $\alpha$ des éléments de renforcements des deux couches de sommet de travail supérieur à l'angle moyen défini par les éléments de renforcements des deux couches de sommet de travail dans les pneumatiques plus usuels. En effet, la rigidité circonférentielle apporté par la présence de ladite au moins une couche d'éléments de renforcement circonférentiels permet d'augmenter les angles formés par les éléments de renforcement de chacune des couches de sommet de travail avec la direction circonférentielle, lesdits angles semblant ainsi favoriser le fonctionnement du pneumatique et notamment sa manoeuvrabilité lors de roulages sous fortes charges ou bien avec un angle formé avec la direction d'avancement très important. Les inventeurs ont ainsi su mettre en évidence que les propriétés dynamiques du pneumatique, notamment la rigidité de dérive, sont conservées voire améliorées quel que soit l'usage.
Selon un mode de réalisation préféré de l'invention, la valeur absolue de la différence entre les valeurs absolues des angles $\alpha$2 et $\alpha$1 est supérieure ou égale à 10° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.
De préférence, la valeur absolue de la différence entre les valeurs absolues des angles $\alpha$2 et $\alpha$1 est inférieure

à 25° et de préférence encore inférieure à 20°. Au-delà de ces valeurs, le pneumatique serait susceptible de présenter des usures irrégulières dans certaines conditions d'utilisation.

De préférence encore selon l'invention pour améliorer encore les performances du pneumatique à l'égard de chocs tels que ceux subis lors de roulage sur des sols caillouteux, l'angle moyen $\alpha$ satisfait la relation : $\alpha >$ 20+164*exp(-L/100).

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

FR1 est la force rupture en extension uniaxiale des câbles de la couche de travail radialement la plus intérieure,

$$F1 = p_1 * Tc * [(\tan(|\alpha2|)/(\tan(|\alpha1|)+\tan(|\alpha2|))) / \cos^2(|\alpha1|) + C],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon une variante avantageuse de réalisation de l'invention, ladite au moins une couche d'éléments de renforcement circonférentiels présente une largeur axiale supérieure à 0.5xL.

L est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, les deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, ladite au moins une couche d'éléments de renforcement circonférentiels est radialement disposée entre les deux couches de sommet de travail.

Selon ce mode de réalisation de l'invention, ladite au moins une couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à ladite au moins une couche d'éléments de renforcement circonférentiels sont supérieures à la largeur axiale de ladite au moins une couche d'éléments de renforcement circonférentiels et de préférence, lesdites couches de sommet de travail adjacentes à ladite au moins une couche d'éléments de renforcement circonférentiels sont de part et d'autre du plan équatorial et dans le prolongement axial immédiat de ladite au moins une couche d'éléments de renforcement circonférentiels couplées sur une largeur axiale, pour être ensuite découplées par une couche de mélange de caoutchouc au moins sur le restant de la largeur commune auxdites deux couches de travail.

La présence de tels couplages entre les couches de sommet de travail adjacentes à ladite au moins une couche d'éléments de renforcement circonférentiels permettent la diminution des contraintes de tension agissant sur les éléments circonférentiels axialement le plus à l'extérieur et situé le plus près du couplage.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa, la contrainte de traction correspondant à une tension mesurée ramenée à la section de métal de l'élément de renforcement. Les mesures sont réalisées sur des câbles extraits du pneumatique sur une partie de la couche d'éléments de renforcement circonférentiels s'étendant depuis une extrémité axiale de ladite couche sur une largeur axiale de 50 mm vers l'intérieur de ladite couche.

Les modules des mêmes éléments de renforcement peuvent être mesurés sur une courbe contrainte de traction en fonction de l'allongement déterminée avec une précontrainte de 10 MPa, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de ladite au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3×(0.26+6×0.23) 4.8/7.5 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa, la contrainte de traction correspondant à une tension mesurée ramenée à la section de métal de l'élément de renforcement. Sur une courbe contrainte de traction en fonction de l'allongement déterminée avec une précontrainte de 10 MPa, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3×(0.32+6×0.28) 5.6/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa, la contrainte de traction correspondant à une tension mesurée ramenée à la section de métal de l'élément de renforcement. Sur une courbe contrainte de traction en fonction de l'allongement déterminée avec une précontrainte de 10 MPa, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Selon un mode de réalisation de l'invention, les éléments de renforcement des couches de sommet de travail sont des câbles métalliques inextensibles.

Selon un mode de réalisation préféré de l'invention, optimisant l'allègement du pneumatique, les deux couches de sommet de travail et ladite au moins une couche d'éléments de renforcement circonférentiels sont seules présentes pour constituer l'armature de sommet sur la totalité de la largeur axiale de l'armature de sommet.

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représentent qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/70 R 22.5, a un rapport de forme H/L égal à 0,70, H étant la hauteur du pneumatique 1 sur sa jante de montage et L sa largeur axiale maximale. Ledit pneumatique 1 comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure, l'armature de carcasse 2 est frettée conformément à l'invention par une armature de sommet 4, formée radialement de l'intérieur à l'extérieur :

- d'une première couche de travail 41 formée de câbles métalliques orientés d'un angle $\alpha 1$ égal à 19°,

- D'une couche d'éléments de renforcement circonférentiels 43 formée de câbles métalliques en acier de type 21x23,

- d'une deuxième couche de travail 42 formée de câbles métalliques orientés d'un angle $\alpha 2$ égal à 38° et croisés avec les câbles métalliques de la première couche de travail 41, les câbles de chacune des couches de travail 41, 42 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm.

Les câbles métalliques constituant les éléments de renforcement de la couche d'éléments de renforcement circonférentiels sont distants les uns des autres de 2 mm, selon la normale à la direction de la ligne moyenne des câbles.

Le pneumatique est gonflé à une pression de 9 bars.

La largeur axiale $L_{41}$ de la première couche de travail 41 est égale à 251 mm.

La largeur axiale $L_{42}$ de la deuxième couche de travail 42 est égale à 232 mm.

La largeur axiale $L_{43}$ de la couche d'éléments de renforcement circonférentiels 43 est égale à 194 mm.

La largeur axiale de la bande de roulement $L_5$ est égale à 256 mm.

La largeur axiale L est égale à 316 mm.

La différence entre les angles $\alpha 1$ et $\alpha 2$ formés par les câbles de la première couche de sommet de travail avec la direction circonférentielle et ceux des câbles de la deuxième couche de sommet de travail est égale à 19°.

L'angle moyen $\alpha$ est égal à 27.4° et est bien compris entre 19.6° et 32.7°.

La distance de mesurée sur une coupe du pneumatique selon une direction radiale passant par l'extrémité de la couche 43 d'éléments de renforcement circonférentiels entre la couche de travail 42 radialement la plus extérieure et la surface extérieure 3 de la bande de roulement 5 est égale à 19.5 mm.

La distance de mesurée sur une coupe du pneumatique selon une direction radiale contenue dans le plan médian circonférentiel XX' entre la couche de travail 42 radialement la plus extérieure et la surface extérieure 3 de la bande de roulement 5 est égale à 21.5 mm.

Les distances de et $d_E$ sont mesurées sur une coupe du pneumatique dont l'écartement des bourrelets est le même que lorsque le pneumatique est monté sur la jante de montage préconisée par l'ETRTO.

La distance ds mesurée sur un pneumatique, monté sur sa jante nominale et gonflé à la pression nominale durant 24 heures avant d'être dégonflé jusqu'à une pression de 2 bar, selon une direction radiale passant par l'extrémité de la couche d'éléments de renforcement circonférentiels 43 entre la surface extérieure 3 de la bande de roulement 5 et la droite D tangente au point de la surface extérieure 3 de la bande de roulement 5 contenu dans le plan médian circonférentiel XX'est égale à 2.5 mm. L'extrémité de la couche d'éléments de renforcement circonférentiels 43 est préalablement déterminée par radiographie.

Le ratio R correspondant à $(d_C-d_E)$ / ds est égal à 0.8 et donc tel que 0.05< R < 3.

La valeur mesurée de Re est égale à 507.0 mm.

La valeur mesurée de Es est égale à 24.9 mm.

La valeur moyenne RL des rayons mesurés est égale à 395.0 mm.

La valeur Rt déterminée sur le pneumatique est égale à 2100 mm.

La valeur calculée de Tc est égale à 325.7 N/mm.

La valeur calculée de C est égale à 0.

La valeur de F1 est égale à 505.7 N.

La valeur de F2 est égale à 320.9 N.

Les forces ruptures des éléments de renforcement des couches de sommet de travail FR1 et FR2 sont égales à 2600 N.

Le ratio d'utilisation du potentiel de rupture F2/FR2 est égal à 12.3 %.

Le ratio d'utilisation du potentiel de rupture F1/FR1 est égal à 19.4 %.

Le ratio d'utilisation du potentiel de rupture F1/FR1 est 58 % supérieur au ratio d'utilisation du potentiel de rupture F2/FR2.

Le pneumatique selon l'invention est comparé à plusieurs pneumatiques de référence.

Un premier pneumatique de référence R1 diffère du pneumatique selon l'invention par un ratio R de valeur égale à zéro, les distances $d_E$ et de étant identiques et égales à la valeur $d_E$ du pneumatique selon l'invention soit 19.5 mm.

Le ratio R du pneumatique R1 correspondant à $(d_C-d_E)$ / ds est égal à 0.

Un deuxième pneumatique de référence R2 diffère du pneumatique selon l'invention par un ratio R de valeur égale à zéro, les distances $d_E$ et de étant identiques et égales à la valeur de du pneumatique selon l'invention soit 21.5 mm.

Le ratio R du pneumatique R2 correspondant à $(d_C-d_E)$ / ds est égal à 0.

Un troisième pneumatique de référence R3 de même dimension que le pneumatique selon l'invention qui diffère de celui-ci par son armature de sommet formée radialement de l'intérieur à l'extérieur :

- d'une première couche de travail formée de câbles métalliques orientés d'un angle égal à 18°,

- d'une couche d'éléments de renforcement circonférentiels formée de câbles métalliques en acier de type 21x23,

- d'une seconde couche de travail formée de câbles métalliques orientés d'un angle égal à 18° et croisés aux câbles métalliques de la première couche de travail, les câbles de chacune des couches de travail étant orientés de part et d'autre de la direction circonférentielle,

- d'une couche de protection formée de câbles métalliques élastiques 6.35, dont la distance entre les éléments de renforcement, mesurée selon la normale à la direction de la ligne moyenne du câble est égal à 2.5 mm, orientés d'un angle égal à 18°, du même côté que les câbles de la seconde couche de travail.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2.5 mm. Les deux couches de sommet de travail ne diffèrent donc des couches de sommet de travail du pneumatique selon l'invention que par les angles.

Les câbles métalliques constituant les éléments de renforcement de la couche d'éléments de renforcement circonférentiels sont distants les uns des autres de 2 mm, selon la normale à la direction de la ligne moyenne des câbles.

Le pneumatique de référence est gonflé à une pression de 9 bars.

La largeur axiale de la première couche de travail est égale à 251 mm.

La largeur axiale de la couche d'éléments de renforcement circonférentiels est égale à 194 mm.

La largeur axiale de la deuxième couche de travail est égale à 232 mm.

La largeur axiale de la couche de protection est égale à 188 mm.

La valeur absolue de la différence entre les valeurs absolues des angles formés par les câbles de la première couche de sommet de travail avec la direction circonférentielle et ceux des câbles de la deuxième couche de sommet de travail est nulle, les angles étant identiques, contrairement à l'invention.

L'angle moyen est égal 18° et n'est pas compris entre 19.6° et 32.7°.

La valeur mesurée de Re est égale à 506.5 mm.

La valeur mesurée de Es est égale à 24.9 mm.

La valeur moyenne RL des rayons mesurés est égale à 395.0 mm.

La valeur Rt déterminée sur le pneumatique est égale à 2500 mm.

La valeur calculée de Tc est égale à 327.4 N/mm.

La valeur calculée de C est égale à 0.

La valeur de F1 est égale à 452.5 N.

La valeur de F2 est égale à 452.5 N.

Les forces ruptures des éléments de renforcement des couches de sommet de travail FR1 et FR2 sont égales à 2600 N.

Le ratio d'utilisation du potentiel de rupture F2/FR2 est égal à 17.4 %.

Le ratio d'utilisation du potentiel de rupture F1/FR1 est égal à 17.4 %.

Le ratio d'utilisation du potentiel de rupture F1/FR1 est identique au ratio d'utilisation du potentiel de rupture F2/FR2.

Le troisième pneumatique de référence R3 diffère encore du pneumatique selon l'invention par un ratio R de valeur égale à zéro, les distances $d_E$ et de étant identiques et égales à 21.5 mm.

Le ratio R du pneumatique R3 correspondant à ($d_C$-$d_E$) / ds est égal à 0.

Des essais ont été réalisés avec des pneumatiques réalisés selon l'invention conformément à la figure et avec les trois pneumatiques de référence R1, R2, R3.

Tout d'abord, nous faisons figurer dans le tableau suivant la masse de chacun des pneumatiques à partir d'une base 100 correspondant à la valeur mesurée pour le pneumatique de référence R3.

|  | Pneumatique R3 | Pneumatique R2 | Pneumatique R1 | Pneumatique Invention |
|---|---|---|---|---|
| Masse | 100 | 99 | 96 | 98 |

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les trois pneumatiques de référence R1, R2, R3. Il apparaît donc que les pneumatiques selon l'invention présentent des performances sensiblement équivalentes en termes d'endurance à celles notamment des pneumatiques de référence R3 lors de roulage sur des sols bitumineux.

Des tests T1 visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence R3.

|  | Pneumatique R3 | Pneumatique R2 | Pneumatique R1 | Pneumatique Invention |
|---|---|---|---|---|
| T1 | 100 | 149 | 147 | 149 |

Ces résultats montrent que malgré un allégement du pneumatique par une diminution de la masse de son armature de sommet, l'énergie à rupture lors d'un choc sur la surface de la bande de roulement est notamment significativement supérieure à celle de la référence R3.

Des tests T2 visant à caractériser la résistance aux agressions de la bande de roulement pouvant conduire à des risques de corrosion des éléments de renforcement de la couche d'éléments de renforcement radialement la plus extérieure. Ces tests consistent à effectuer un roulage de 10 000 km du pneumatique, gonflé à une pression recommandée et soumis à une charge recommandée, sur une piste recouverte de cailloux coupants puis à maintenir les pneumatiques dans une atmosphère oxydante pouvant conduire à une oxydation des éléments de renforcement métalliques des couches de travail. Les valeurs expriment le nombre de perforation traversant la bande roulement et aboutissant à une zone de la couche de travail radialement la plus extérieure endommagée par corrosion.

|  | Pneumatique R3 | Pneumatique R2 | Pneumatique R1 | Pneumatique Invention |
|---|---|---|---|---|
| T2 | 31 | 32 | 62 | 24 |

Ces résultats montrent encore que malgré un allégement du pneumatique par rapport au pneumatique de référence R3, les risques de corrosion sont diminués, du fait a priori d'une armature de sommet du pneumatique plus à même de supporter les déformations et donc moins sensible aux agressions. La comparaison avec la référence R2 montre encore qu'un allègement supplémentaire combiné à une moindre sollicitation des éléments de renforcement circonférentiels dans la partie centrale du pneumatique lors de la fabrication du pneumatique confère au pneumatique réalisé conformément à l'invention d'encore meilleurs résultats au regard de ce type d'agressions.

**Revendications**

1. - Pneumatique (1) pour véhicule de type poids-lourd, à armature de carcasse radiale (2), comprenant une armature de sommet (4) comprenant deux couches de sommet de travail (41, 42) d'éléments de renforcement croisés d'une nappe à l'autre en faisant avec la direction circonférentielle des angles $\alpha 1$, $\alpha 2$, mesurés sur une coupe du pneumatique, supérieurs à 8°, lesdits angles $\alpha 1$ et $\alpha 2$ étant orientés de part et d'autre de la direction circonférentielle et au moins une couche d'éléments de renforcement circonférentiels (43), l'armature de sommet (4) étant coiffée radialement d'une bande de roulement (5), ladite bande de roulement (5) étant réunie à deux bourrelets par l'intermédiaire de deux flancs, au plus lesdites deux couches de sommet de travail (41, 42) et ladite au moins une couche d'éléments de renforcement circonférentiels (43) étant seules présentes pour constituer l'armature de sommet (4) sur au moins 80 % de la largeur axiale de l'armature de sommet (4), les éléments de renforcement de la couche de travail (42) radialement la plus extérieure formant un angle $\alpha 2$ avec la direction circonférentielle supérieur en valeur absolue à l'angle $\alpha 1$ formé par les éléments de renforcement de la couche de travail radialement la plus intérieure (41) avec la direction circonférentielle, la valeur absolue de la différence entre les valeurs absolues des angles $\alpha 2$ et $\alpha 1$ étant supérieure à 4°, l'angle moyen $\alpha$ satisfaisant la relation :

$$14 + 131 * exp(-L/100) < \alpha < 28 + 110 * exp(-L/100),$$

$\alpha$ étant défini par la relation $Arctan((tan(|\alpha 1|) * tan(|\alpha 2|))^{1/2})$, L étant la largeur maximale du pneumatique mesurée selon la direction axiale sur le pneumatique monté sur sa jante nominale et gonflé à sa pression nominale et exprimée en mm, **caractérisé en ce que,** dans une coupe méridienne dudit pneumatique, le ratio R de la différence entre la distance de mesurée selon une direction radiale contenue dans le plan médian circonférentiel entre la couche de travail (42) radialement la plus extérieure et la surface extérieure (3) de la bande de roulement (5) et la distance $d_E$ mesurée selon une direction radiale passant par une extrémité de la couche d'éléments de renforcement circonférentiels (43) entre la couche de travail (42) radialement la plus extérieure et la surface extérieure (3) de la bande de roulement (5) sur la distance ds mesurée selon une direction radiale passant par ladite extrémité de la couche d'éléments de renforcement circonférentiels (43) entre la surface extérieure (3) de la bande de roulement (5) et la droite (D) tangente au point de la surface extérieure (3) de la bande de roulement (5) contenu dans le plan médian circonférentiel (XX') est tel que 0.05 < R < 3,
les distances de et $d_E$ étant mesurées sur une coupe du pneumatique dont l'écartement des bourrelets est le même que lorsque le pneumatique est monté sur la jante de montage préconisée par l'ETRTO, et
la distance ds étant mesurée sur le pneumatique, monté sur sa jante nominale et gonflé à la pression nominale durant 24 heures avant d'être dégonflé jusqu'à une pression de 2 bar.

2. - Pneumatique (1) selon la revendication 1, **en ce que** le ratio d'utilisation du potentiel de rupture F2/FR2 de la couche de travail (42) radialement la plus extérieure est inférieur à 1/6, dans lequel :
FR2 est la force rupture en extension uniaxiale des câbles de la couche de travail radialement la plus extérieure,

$$F2 = p_2 * Tc * [(tan(|\alpha 1|)/((tan(|\alpha 1|) + tan(|\alpha 2|)))) / cos^2(|\alpha 2|) + C],$$

la mesure

de ladite force rupture étant effectuée en traction selon la norme ISO 6892 de 1984, avec
$Tc = 0.078 * P * Rs * (1 - (R_S^2 - R_L^2)/(2 * Rt * Rs))$,
$C = 0.00035 * (min((L-80) / sin(|\alpha 1|), (L-80) / sin(|\alpha 2|), 480) - 480)$,
pz : le pas de pose des éléments de renforcement de la couche de sommet de travail radialement la plus extérieure, mesuré perpendiculairement aux éléments de renforcement au niveau du médian circonférentiel,

$$Rs = Re - Es,$$

l'épaisseur Es et le pas p2 sont mesurés sur une coupe du pneumatique,

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

RL : moyenne des rayons des points axialement les plus à l'extérieur de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement.

3.  - Pneumatique (1) selon la revendication 1 ou 2, **caractérisé en ce que** ladite au moins une couche d'éléments de renforcement circonférentiels (43) est continue axialement et de préférence centrée sur le plan médian circonférentiel (XX').

4.  - Pneumatique (1) selon l'une des revendications 1 à 3, **caractérisé en ce que** les éléments de renforcement desdites deux couches de sommet de travail (41, 42) sont métalliques.

5.  - Pneumatique (1) selon l'une des revendications 1 à 4, **caractérisé en ce que** la valeur absolue de la différence entre les valeurs absolues des angles $\alpha 2$ et $\alpha 1$ est supérieure ou égale à 10°, et de préférence supérieure à 14°.

6.  - Pneumatique (1) selon l'une des revendications 1 à 5, **caractérisé en ce que** la valeur absolue de la différence entre les valeurs absolues des angles $\alpha 2$ et $\alpha 1$ est inférieure ou égale à 25°, et de préférence inférieure à 20°.

7.  - Pneumatique (1) selon l'une des revendications 1 à 6, **caractérisé en ce que** l'angle moyen $\alpha$ satisfait la relation : $\alpha > 20 + 164 * \exp(-L/100)$.

8.  - Pneumatique (1) selon l'une des revendications 2 à 7, **caractérisé en ce que** le ratio d'utilisation du potentiel de rupture F2/FR2 de la couche de travail (42) radialement la plus extérieure est inférieur à 1/8.

9.  - Pneumatique (1) selon l'une des revendications 1 à 8, **caractérisé en ce que** le ratio d'utilisation du potentiel de rupture F1/FR1 de la couche de travail (41) radialement la plus intérieure est inférieur à 1/3, dans lequel :

FR1 est la force rupture en extension uniaxiale des câbles de la couche de travail radialement la plus intérieure,

$$F1 = p_1 * Tc * [(\tan(|\alpha 2|)/((\tan(|\alpha 1|)+\tan(|\alpha 2|))) / \cos^2(|\alpha 1|) + C],$$

la mesure

de ladite force rupture étant effectuée en traction selon la norme ISO 6892 de 1984, avec

pi : le pas de pose des éléments de renforcement de la couche de sommet de travail radialement la plus intérieure, mesuré perpendiculairement aux éléments de renforcement au niveau du plan médian circonférentiel.

10. - Pneumatique (1) selon la revendication 9, **caractérisé en ce que** le ratio d'utilisation du potentiel de rupture F1/FR1 de la couche de travail (41) radialement la plus intérieure est au moins 30 % supérieur au ratio d'utilisation du potentiel de rupture F2/FR2 de la couche de travail (42) radialement la plus extérieure.

11. - Pneumatique (1) selon l'une des revendications précédentes, **caractérisé en ce qu'au** plus lesdites deux couches de sommet de travail (41, 42) et ladite au moins une couche d'éléments de renforcement circonférentiels (43) sont seules présentes pour constituer l'armature de sommet (4) sur au moins 60% de la largeur axiale de l'armature de sommet (4), et de préférence sur au moins 80% de la largeur axiale de l'armature de sommet (4).

12. - Pneumatique (1) selon l'une des revendications précédentes, **caractérisé en ce que** les éléments de renforcement des couches de sommet de travail (41, 42) sont des câbles métalliques inextensibles.

13. - Pneumatique (1) selon l'une des revendications précédentes, **caractérisé en ce que** ladite au moins une couche d'éléments de renforcement circonférentiels (43) est radialement disposée entre les deux couches de sommet de travail (41, 42).

**14.** - Pneumatique (1) selon l'une des revendications précédentes, les deux couches de sommet de travail (41, 42) présentant des largeurs axiales différentes, **caractérisé en ce que** la couche de sommet de travail (41) axialement la plus large est radialement à l'intérieur de la couche de travail (42) radialement la plus extérieure.

**15.** - Pneumatique (1) selon l'une des revendications précédentes, **caractérisé en ce que** les éléments de renforcement de ladite au moins une couche d'éléments de renforcement circonférentiels (43) sont des éléments de renforcement métalliques présentant un module sécant à 0,7 % d'allongement compris entre 10 et 120 GPa et un module tangent maximum inférieur à 150 GPa, les mesures de modules étant effectuées en traction selon la norme ISO 6892 de 1984 sur câbles extraits de pneumatiques neufs.

**Patentansprüche**

**1.** Reifen (1) für ein Schwerlastfahrzeug mit Radialkarkassenverstärkung (2), umfassend eine Gürtelverstärkung (4) mit zwei Arbeitsgürtellagen (41, 42) aus Verstärkungselementen, die sich von einer Lage zur anderen kreuzen, wobei sie mit der Umfangsrichtung Winkel $\alpha$1, $\alpha$2, gemessen an einem Schnitt des Reifens, von mehr als 8° bilden, wobei die Winkel $\alpha$1 und $\alpha$2 beidseits der Umfangsrichtung ausgerichtet sind, und mindestens eine Lage aus umfänglichen Festigkeitselementen (43), wobei die Gürtelverstärkung (4) radial von einem Laufstreifen (5) überdeckt wird, wobei der Laufstreifen (5) über zwei Seitenwände mit zwei Wülsten verbunden ist, wobei höchstens die beiden Arbeitsgürtellagen (41, 42) und die mindestens eine Lage aus umfänglichen Festigkeitselementen (43) allein vorhanden sind, um die Gürtelverstärkung (4) über mindestens 80 % der axialen Breite der Gürtelverstärkung (4) auszubilden, wobei die Festigkeitselemente der radial äußersten Arbeitslage (42) einen Winkel $\alpha$2 mit der Umfangsrichtung bilden, der vom absoluten Wert her größer als der Winkel $\alpha$1 ist, der von den Festigkeitselementen der radial innersten Arbeitslage (41) mit der Umfangsrichtung gebildet wird, wobei der absolute Wert der Differenz zwischen den absoluten Werten der Winkel $\alpha$2 und $\alpha$1 größer als 4° ist, wobei der mittlere Winkel $\alpha$ die folgende Gleichung erfüllt:

$$14+131*\exp(-L/100) < \alpha < 28+110*\exp(-L/100),$$

wobei $\alpha$ durch die Gleichung Arctan((tan(|$\alpha$1|) *tan(|$\alpha$2|))$^{1/2}$) definiert ist, wobei L die maximale Breite des Reifens ist, die entlang der axialen Richtung an dem auf seiner Nennfelge montierten und auf seinen Nenndruck aufgepumpten Reifen gemessen und in mm ausgedrückt wird, **dadurch gekennzeichnet, dass**, in einem Meridianschnitt des Reifens, das Verhältnis R der Differenz zwischen dem entlang einer in der Umfangsmittelebene enthaltenen radialen Richtung gemessenen Abstand $d_C$ zwischen der radial äußersten Arbeitslage (42) und der Außenfläche (3) des Laufstreifens (5) und dem entlang einer durch ein Ende der Lage aus umfänglichen Festigkeitselementen (43) verlaufenden radialen Richtung gemessenen Abstand $d_E$ zwischen der radial äußersten Arbeitslage (42) und der Außenfläche (3) des Laufstreifens (5) zu dem entlang einer durch das Ende der Lage aus umfänglichen Festigkeitselementen (43) verlaufenden radialen Richtung gemessenen Abstand $d_S$ zwischen der Außenfläche (3) des Laufstreifens (5) und der Geraden (D), die den in der Umfangsmittelebene (XX') enthaltenen Punkt der Außenfläche (3) des Laufstreifens (5) tangiert, dergestalt ist, dass 0,05< R <3, wobei die Abstände $d_C$ und $d_E$ an einem Schnitt des Reifens gemessen werden, bei dem die Weite der Wülste die gleiche ist wie bei dem auf der von der ETRTO empfohlenen Montagefelge montierten Reifen, und wobei der Abstand $d_S$ an dem Reifen gemessen wird, der auf seiner Nennfelge montiert ist und während 24 Stunden auf den Nenndruck aufgepumpt ist, bevor er bis auf einen Druck von 2 bar geleert wird.

**2.** Reifen (1) nach Anspruch 1, **dadurch gekennzeichnet, dass** der Ausschöpfungsgrad des Bruchpotentials F2/FR2 der radial äußersten Arbeitslage (42) kleiner als 1/6 ist, wobei:

FR2 die Bruchkraft bei uniaxialer Dehnung der Korde der radial äußersten Arbeitslage ist,
F2 = $p_2$ * Tc * [(tan(|$\alpha$1|)/((tan(|$\alpha$1|)+tan(|$\alpha$2|)))/ cos$^2$(|$\alpha$2|)+C], wobei die Messung der Bruchkraft bei Zugbeanspruchung nach der Norm ISO 6892 von 1984 gemessen wird, mit

$$Tc = 0,078 * P * Rs* (1-(Rs^2-R_L^2)/(2*Rt*Rs)),$$

C = 0,00035*(min(L-80) / sin($|\alpha1|$), (L-80) / sin($|\alpha2|$), 480)-480),

$p_2$: Schrittweite der Anbringung der Festigkeitselemente der radial äußersten Arbeitsgürtellage, gemessen senkrecht zu den Festigkeitselementen am Umfangsmittel,
Rs = Re - Es,
wobei die Dicke Es und die Schrittweite p2 an einem Schnitt des Reifens gemessen werden,
Re: Außenradius des Reifens, gemessen an dem radial äußersten Punkt auf der Oberfläche des Laufstreifens des Reifens, wobei die Oberfläche extrapoliert wird, um die möglichen Hohlräume auszugleichen,
Es: radialer Abstand zwischen dem radial äußersten Punkt des Reifens und seiner orthogonalen Projektion auf die radial äußere Fläche eines Festigkeitselements der radial innersten Arbeitsgürtellage,
RL: Mittelwert der Radien der axial äußersten Punkte jeder Seite des Reifens,
Rt: Radius des Kreises, der durch drei auf der Außenoberfläche des Laufstreifens außerhalb der Hohlräume gelegene Punkte verläuft, die ausgehend von einem Schulterende in jeweiligen axialen Abständen von ¼, ½ und ¾ der Breite des Laufstreifens definiert werden

3. Reifen (1) nach Anspruch 1 oder 2, **dadurch gekennzeichnet, dass** die mindestens eine Lage aus umfänglichen Festigkeitselementen (43) axial durchgehend ist und bevorzugt auf die Umfangsmittelebene (XX') zentriert ist.

4. Reifen (1) nach einem der Ansprüche 1 bis 3, **dadurch gekennzeichnet, dass** die Festigkeitselemente der beiden Arbeitsgürtellagen (41, 42) metallisch sind.

5. Reifen (1) nach einem der Ansprüche 1 bis 4, **dadurch gekennzeichnet, dass** der absolute Wert der Differenz zwischen den absoluten Werten der Winkel $\alpha2$ und $\alpha1$ größer als oder gleich 10° ist und bevorzugt größer als 14° ist.

6. Reifen (1) nach einem der Ansprüche 1 bis 5, **dadurch gekennzeichnet, dass** der absolute Wert der Differenz zwischen den absoluten Werten der Winkel $\alpha2$ und $\alpha1$ kleiner als oder gleich 25° ist und bevorzugt kleiner als 20° ist.

7. Reifen (1) nach einem der Ansprüche 1 bis 6, **dadurch gekennzeichnet, dass** der mittlere Winkel die folgende Gleichung erfüllt hat: $\alpha > 20 + 164^* \exp(-L/100)$ .

8. Reifen (1) nach einem der Ansprüche 2 bis 7, **dadurch gekennzeichnet, dass** der Ausschöpfungsgrad des Bruchpotentials F2/FR2 der radial äußersten Arbeitslage (42) kleiner als 1/8 ist.

9. Reifen (1) nach einem der Ansprüche 1 bis 8, **dadurch gekennzeichnet, dass** der Ausschöpfungsgrad des Bruchpotentials F1/FR1 der radial innersten Arbeitslage (41) kleiner als 1/3 ist, wobei:

FR1 die Bruchkraft bei uniaxialer Dehnung der Korde der radial innersten Arbeitslage ist,
F1 = $p_1$ * Tc * [(tan($|\alpha2|$)/((tan($|\alpha1|$)+tan($|\alpha2|$))) / cos$^2$($|\alpha1|$)+C], wobei die Messung der Bruchkraft bei Zugbeanspruchung nach der Norm ISO 6892 von 1984 gemessen wird, mit
$p_1$: Schrittweite der Anbringung der Festigkeitselemente der radial innersten Arbeitsgürtellage, gemessen senkrecht zu den Festigkeitselementen an der Umfangsmittelebene.

10. Reifen (1) nach Anspruch 9, **dadurch gekennzeichnet, dass** der Ausschöpfungsgrad des Bruchpotentials F1/FR1 der radial innersten Arbeitslage (41) mindestens 30 % größer als der Ausschöpfungsgrad des Bruchpotentials F2/FR2 der radial äußersten Arbeitslage (42) ist.

11. Reifen (1) nach einem der vorhergehenden Ansprüche, **dadurch gekennzeichnet, dass** höchstens die beiden Arbeitsgürtellagen (41, 42) und die mindestens eine Lage aus umfänglichen Festigkeitselementen (43) allein vorhanden sind, um die Gürtelverstärkung (4) über mindestens 60 % der axialen Breite der Gürtelverstärkung (4) und bevorzugt über mindestens 80 % der axialen Breite der Gürtelverstärkung (4) auszubilden.

12. Reifen (1) nach einem der vorhergehenden Ansprüche, **dadurch gekennzeichnet, dass** die Festigkeitselemente der Arbeitsgürtellagen (41, 42) nicht dehnbare Metallkorde sind.

13. Reifen (1) nach einem der vorhergehenden Ansprüche, **dadurch gekennzeichnet, dass** die mindestens eine Lage aus umfänglichen Festigkeitselementen (43) radial zwischen den beiden Arbeitsgürtellagen (41, 42) angeordnet ist.

**14.** Reifen (1) nach einem der vorhergehenden Ansprüche, wobei die beiden Arbeitsgürtellagen (41, 42) unterschiedliche axiale Breiten aufweisen, **dadurch gekennzeichnet, dass** die axial breiteste Arbeitsgürtellage (41) radial innerhalb der radial äußersten Arbeitslage (42) ist.

**15.** Reifen (1) nach einem der vorhergehenden Ansprüche, **dadurch gekennzeichnet, dass** die Festigkeitselemente der mindestens einen Lage aus umfänglichen Festigkeitselementen (43) metallische Festigkeitselemente sind, die einen Sekantenmodul bei 0,7 % Dehnung zwischen 10 und 120 GPa und einen maximalen Tangentenmodul von weniger als 150 GPa aufweisen, wobei die Messungen von Modulen bei Zugbeanspruchung nach der Norm ISO 6892 von 1984 an aus neuen Reifen entnommenen Korden durchgeführt werden.

**Claims**

**1.** - Tyre (1) for a heavy duty vehicle, with a radial carcass reinforcement (2), comprising a crown reinforcement (4) comprising two working crown layers (41, 42) of reinforcing elements crossed from one ply to the other making angles $\alpha 1$, $\alpha 2$, measured on a cross section of the tyre, greater than 8° with the circumferential direction, said angles $\alpha 1$ and $\alpha 2$ being oriented on either side of the circumferential direction and at least one layer of circumferential reinforcing elements (43), the crown reinforcement (4) being covered radially by a tread (5), said tread (5) being joined to two beads via two sidewalls, at most said two working crown layers (41, 42) and said at least one layer of circumferential reinforcing elements (43) being the only ones present to constitute the crown reinforcement (4) over at least 80% of the axial width of the crown reinforcement (4), the reinforcing elements of the radially outermost working layer (42) forming an angle $\alpha 2$ with the circumferential direction greater in terms of absolute value than the angle $\alpha 1$ formed by the reinforcing elements of the radially innermost working layer (41) with the circumferential direction, the absolute value of the difference between the absolute values of the angles $\alpha 2$ and $\alpha 1$ being greater than 4°, the mean angle $\alpha$ satisfying the relationship:

$$14+131*\exp(-L/100) < \alpha < 28+110*\exp(-L/100),$$

$\alpha$ being defined by the relationship $\text{Arctan}((\tan(|\alpha 1|)*\tan(|\alpha 2|))^{1/2})$, L being the maximum width of the tyre measured in the axial direction on the tyre mounted on its nominal rim and inflated to its nominal pressure and expressed in mm, **characterized in that,** in a meridian cross section of said tyre, the ratio R of the difference between the distance de measured in a radial direction contained in the circumferential median plane between the radially outermost working layer (42) and the outer surface (3) of the tread (5) and the distance $d_E$ measured in a radial direction passing through one end of the layer of circumferential reinforcing elements (43) between the radially outermost working layer (42) and the outer surface (3) of the tread (5) to the distance ds measured in a radial direction passing through said end of the layer of circumferential reinforcing elements (43) between the outer surface (3) of the tread (5) and the straight line (D) tangent to the point on the outer surface (3) of the tread (5) contained in the circumferential median plane (XX') is such that 0.05< R < 3, the distances de and $d_E$ being measured on a cross section of a tyre, the bead spacing of which is the same as when the tyre is mounted on the mounting rim recommended by the ETRTO, and the distance ds being measured on a tyre mounted on its nominal rim and inflated to its nominal pressure for 24 hours before being deflated to a pressure of 2 bar.

**2.** - Tyre (1) according to Claim 1, **characterized in that** the rupture potential index F2/FR2 of the radially outermost working layer (42) is less than 1/6, wherein:

FR2 is the breaking force in uniaxial extension of the cords of the radially outermost working layer,

$$F2 = p_2 * Tc * [(\tan(|\alpha 1|)/((\tan(|\alpha 1|)+\tan(|\alpha 2|))) / \cos^2(|\alpha 2|) + C],$$

the measure of said breaking force being realised under tension in accordance with the standard ISO 6892 of 1984, where

$$Tc = 0.078 * P * Rs* (1-(Rs^2-R_L^2)/(2*Rt*Rs)),$$

$$C = 0.00035 * (\min((L-80) / \sin(|\alpha 1|), (L-80) / \sin(|\alpha 2|), 480) - 480),$$

$p_2$ is the pitch at which the reinforcing elements of the radially outermost working crown layer are laid, measured perpendicularly to the reinforcing elements at the circumferential median,

$$Rs = Re - Es,$$

the thickness Es and the pitch $p_2$ are measured on a cross section of the tyre Re is the external radius of the tyre, measured at the radially outermost point on the tread surface of the tyre, said surface being extrapolated in order to fill any voids there might be,

Es is the radial distance between the radially outermost point of the tyre and the orthogonal projection thereof onto the radially exterior face of a reinforcing element of the radially innermost working crown layer,

RL is the mean of the radii of the axially outermost points on each side of the tyre,

Rt is the radius of the circle passing through three points situated on the outer surface of the tread outside of the voids, defined from a shoulder end at respective axial distances equal to ¼, ½ and ¾ of the width of the tread.

3. - Tyre (1) according to Claim 1 or 2, **characterized in that** said at least one layer of circumferential reinforcing elements (43) is axially continuous and preferably centered on the circumferential median plane (XX').

4. - Tyre (1) according to one of Claims 1 to 3, **characterized in that** the reinforcing elements of said two working crown layers (41, 42) are made of metal.

5. - Tyre (1) according to one of Claims 1 to 4, **characterized in that** the absolute value of the difference between the absolute values of the angles $\alpha 2$ and $\alpha 1$ is greater than or equal to 10°, and preferably greater than 14°.

6. - Tyre (1) according to one of Claims 1 to 5, **characterized in that** the absolute value of the difference between the absolute values of the angles $\alpha 2$ and $\alpha 1$ is less than or equal to 25°, and preferably less than 20°.

7. - Tyre (1) according to one of Claims 1 to 6, **characterized in that** the mean angle $\alpha$ satisfies the relationship: $\alpha > 20 + 164 * \exp(-L/100)$.

8. - Tyre (1) according to one of Claims 2 to 7, **characterized in that** the rupture potential index F2/FR2 of the radially outermost working layer (42) is less than 1/8.

9. - Tyre (1) according to one of Claims 1 to 8, **characterized in that** the rupture potential index F1/FR1 of the radially innermost working layer (41) is less than 1/3, wherein:

FR1 is the breaking force in uniaxial extension of the cords of the radially innermost working layer,

$$F1 = p_1 * Tc * [(\tan(|\alpha 2|)/((\tan(|\alpha 1|) + \tan(|\alpha 2|))) / \cos^2(|\alpha 1|) + C],$$

the measure of said breaking force being realised under tension in accordance with the standard ISO 6892 of 1984, where

$P_1$ is the pitch at which the reinforcing elements of the radially innermost working crown layer are laid, measured perpendicular to the reinforcing elements at the circumferential median plane.

10. - Tyre (1) according to Claim 9, **characterized in that** the rupture potential index F1/FR1 of the radially innermost working layer (41) is at least 30% higher than the rupture potential index F2/FR2 of the radially outermost working layer (42).

11. - Tyre (1) according to one of the preceding claims, **characterized in that that** at most said two working crown layers (41, 42) and said at least one layer of circumferential reinforcing elements (43) are the only ones present to constitute the crown reinforcement (4) over at least 60% of the axial width of the crown reinforcement (4), and preferably over at least 80% of the axial width of the crown reinforcement (4).

**12.** - Tyre (1) according to one of the preceding claims, **characterized in that** the reinforcing elements of the working crown layers (41, 42) are inextensible metal cords.

**13.** - Tyre (1) according to one of the preceding claims, **characterized in that** said at least one layer of circumferential reinforcing elements (43) is positioned radially between the two working crown layers (41, 42).

**14.** - Tyre (1) according to one of the preceding claims, the two working crown layers (41, 42) having different axial widths, **characterized in that** the axially widest working crown layer (41) is radially inside the radially outermost working layer (42).

**15.** - Tyre (1) according to one of the preceding claims, **characterized in that** the reinforcing elements of said at least one layer of circumferential reinforcing elements (43) are metal reinforcing elements having a secant modulus at 0.7% elongation of between 10 and 120 GPa and a maximum tangent modulus of less than 150 GPa, the measures of modulus being realised under tension in accordance with the standard ISO 6892 of 1984.

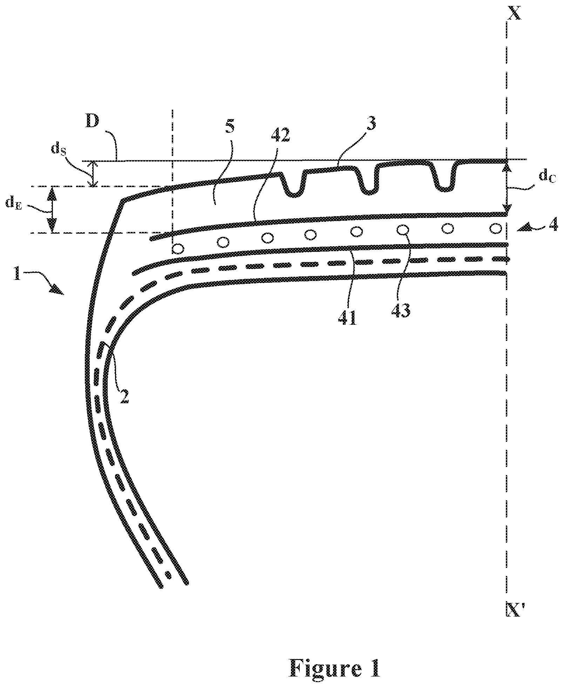

Figure 1

**EP 4 065 384 B1**

## RÉFÉRENCES CITÉES DANS LA DESCRIPTION

**Documents brevets cités dans la description**

- FR 2728510
- WO 9924269 A
- WO 2017149223 A
- WO 2019048762 A